# EUROPÄISCHE PATENTSCHRIFT

(11) **EP 1 993 769 B1**
(45) Veröffentlichungstag und Bekanntmachung des Hinweises auf die Patenterteilung: **02.04.2014**
(21) Anmeldenummer: 07722756.9
(22) Anmeldetag: 17.01.2007
(51) Int. Cl.: B23D 45/10, B23D 59/00, B27G 19/10

(54) **SÄGEVORRICHTUNG**
SAWING APPARATUS
DISPOSITIF DE SCIAGE

(30) Priorität: 10.03.2006 DE 102006011131
(43) Veröffentlichungstag der Anmeldung: 26.11.2008
(73) Patentinhaber: HOLZMA Plattenaufteiltechnik GmbH, 75365 Calw-Holzbronn (DE)
(72) Erfinder: ELHAUS, Uwe, 75365 Calw (DE)
(74) Vertreter: DREISS Patentanwälte PartG mbB
(86) Internationale Anmeldenummer: PCT/EP2007/000366
(87) Internationale Veröffentlichungsnummer: WO 2007/104376

(56) Entgegenhaltungen:
- DE-A1- 19 520 108
- US-B1- 6 422 227

## Beschreibung

Die Erfindung betrifft eine Sägevorrichtung nach dem Oberbegriff des Anspruchs 1. Eine solche Sägevorrichtung ist der DE 195 20 108 A1 zu entnehmen.

Vom Markt her sind Sägevorrichtungen mit einer Trennsäge und einem Vorritzer bekannt. Durch einen solchen Vorritzer wird eine Vorritzfuge im Bereich der Oberfläche eines plattenförmigen Werkstücks eingebracht, welche jedoch das Werkstück nicht trennt. Der eigentliche Trennvorgang wird durch die Trennsäge durchgeführt. Die Breite der Vorritzfuge ist üblicherweise gleich wie die Breite der Trennsäge, oder sie ist etwas größer (max. 0,1 mm) als die Breite der Trennfuge. Durch den vorritzer wird vermieden, dass die Werkstückoberfläche beim eigentlichen Trennvorgang durch die Trennsäge ausreißt. Dies gilt insbesondere für Werkstücke mit einer Oberflächenbeschichtung. Bekannt sind ferner Vorritzer mit einem konischen Vorritzerblatt, bei denen die Breite der Vorritzfuge über deren Tiefe eingestellt wird.

Bei der Herstellung der Vorritzfuge ist es wichtig, dass diese mit der später eingebrachten Trennfuge möglichst exakt fluchtet. Daher wird in der DE 195 20 108 A1 vorgeschlagen, beim Start eines Sägevorgangs ein Trennsägeblatt der Trennsäge und ein Vorritzerblatt des Vorritzers mittels Sensoren zu vermessen, und abhängig von dem Messergebnis die Position des vorritzerblatts gegenüber dem Trennsägeblatt einzustellen. Diese bekannte Vorrichtung hat jedoch den Nachteil, dass sie sehr komplex ist und dass das Arbeitsergebnis, also die Flucht zwischen Vorritzfuge und Trennfuge, häufig nicht gewährleistet ist. US 6,422,227 B1 beschreibt eine Schneideinrichtung zum Auftrennen eines Halbleiterwafers.

Aufgabe der vorliegenden Erfindung ist es daher, eine Sägevorrichtung zu schaffen, die einfach baut und mit der am bearbeiteten Werkstück ein gutes und zufriedenstellendes Arbeitsergebnis erzielt werden kann.

Diese Aufgabe wird durch eine Sägevorrichtung mit den Merkmalen des Anspruchs 1 gelöst. Vorteilhafte Weiterbildungen der Erfindung sind in Unteransprüchen angegeben.

Bei der erfindungsgemäßen Sägevorrichtung wird auf eine aufwändige Vermessung des Trennsägeblatts und des Vorritzerblatts verzichtet. Stattdessen wird einfach das Arbeitsergebnis der Trennsäge und des Vorritzers erfasst, nämlich die Relativlage der Vorritzfuge, die vom Vorritzer am Werkstück erzeugt wird, gegenüber der eigentlichen Trennfuge, die von der Trennsäge erzeugt und durch die letztlich die Teilung des Werkstücks bewirkt wird, oder die Qualität der Trennfuge. Das erfindungsgemäße Verfahren ist jedoch ebenso anwendbar, wenn keine vollständige, sich also über die gesamte Dicke des Werkstücks erstreckende Fuge, sondern lediglich eine sich nur in einen Teil der Dicke des Werkstücks erstreckende Nut eingebracht wird, im Falle des Vorritzers also.eine Vorritznut und im Falle der Trennsäge eine Trennnut. Die Justierung des Vorritzers ist damit unabhängig von der aktuellen Geometrie und vom Verschleißzustand der Trennsäge und des Vorritzers, so dass die Justierung jederzeit und mit optimalem Ergebnis durchgeführt werden kann. Darüber hinaus ist die Erfassung beziehungsweise das "Vermessen" von Vorritzfuge und Trennfuge bzw. Vorritznut und Trennnut sehr einfach, da diese eine viel einfachere Geometrie aufweisen als die beim Stand der Technik vermessenen Vorritzer- und Trennsägeblätter.

Eine vorteilhafte Weiterbildung der Erfindung besteht darin, dass diese.Erfassungseinrichtung eine Bilderfassung umfasst. Eine solche Bilderfassung arbeitet üblicherweise mit einem CCD-Sensor und einer zugehörigen Optik sowie einer Signal-Auswerteelektronik. Im einfachsten Fall kann für die Bilderfassung eine handelsübliche Videokamera, eine Webcam oder ein digitaler Fotoapparat verwendet werden. Eine solche Erfassungseinrichtung ist preisgünstig und kann beispielsweise auch bei bereits bestehenden Sägevorrichtungen einfach nachgerüstet werden.

Alternativ hierzu kann die Erfassungsrichtung auch eine Laser-Abtasteinrichtung umfassen. Mit dieser können auch komplexere Werkstücke mit einer Oberfläche zuverlässig vermessen werden, die für eine Bilderfassung weniger geeignet ist. Ähnliches gilt für eine Erfassungseinrichtung, welche eine Ultraschall-Abtasteinrichtung umfasst.

Besonders bevorzugt ist es, wenn die Sägevorrichtung einen Monitor umfasst, auf dem die Relativlage der Vorritzfuge oder der Vorritznut gegenüber der Trennfuge oder der Trennnut visualisierbar ist. Beim Einsatz eines Bilderkennungssystems kann der Monitor einfach das Bild der Videokamera übertragen, die Bewertung des Bilds erfolgt dann durch den Bediener. Möglich ist aber auch, dass auf dem Monitor alternativ oder zusätzlich numerische Daten angezeigt werden, welche die Relativlage der Vorritzfuge oder der Vorritznut gegenüber der Trennfuge oder der Trennnut charakterisieren.

Besonders vorteilhaft ist es, wenn die Verstelleinrichtung fernbedienbar ist, da in diesem Falle die Justierung der Vorritzsäge sehr schnell vonstatten gehen kann, denn die Bedienperson kann sich den Weg zum und die manuelle Einstellung am Vorritzer sparen. In Weiterbildung hierzu wird vorgeschlagen, dass die Sägevorrichtung eine Steuer- und Regeleinrichtung aufweist, welche die erfasste Ist- Relativlage automatisch auf eine Soll-Relativlage einstellt. Damit wird gewährleistet, dass die Sägevorrichtung immer optimal justiert ist, unabhängig von der Bedienperson der Sägevorrichtung. Gegebenenfalls ist sogar vorstellbar, dass die Justierung der Vorritzsäge nicht (nur) im Rahmen von Probeschnitten, sondern während der eigentlichen Werkstückherstellung in bestimmten Zeitabschnitten oder kontinuierlich durchgeführt wird, so dass einem mit der Zeit auftretenden Verschleiß in regelmäßigen zeitlichen Abständen oder kontinuierlich entgegengewirkt wird.

Relativ preisgünstig ist die erfindungsgemäße Sägevorrichtung dann, wenn die Trennsäge und/oder der Vorritzer und die Erfassungseinrichtung an einem gemeinsamen Vorschubwagen angeordnet sind. Eine höhere Flexibilität im.Betrieb bietet allerdings jene Vorrichtung, bei der die Erfassungseinrichtung an einem eigenen verfahrbaren Wagen angeordnet ist.

Für die Erfassung der Relativlage der Vorritzfuge oder der Vorritznut gegenüber der Trennfuge oder der Trennnut kann die Vermessung des Werkstücks in einer zur Sägerichtung orthogonalen Ebene erfolgen. Auf diese Weise erhält man ein "Schnittbild" des Werkstücks und somit auch eine Information bezüglich der Tiefe der eingebrachten Vorritzfuge bzw. Vorritznut, was auch eine Justierung in dieser Richtung ermöglicht. Einfacher ist allerdings eine solche Erfassungseinrichtung, welche eine Draufsicht auf das bearbeitete Werkstück im Bereich von Vorritzfuge oder Vorritznut und Trennfuge oder Trennnut erfasst.

Im Rahmen der vorliegenden Erfindung kann die Erfassungseinrichtung eine Auswerteeinrichtung umfassen, die die Qualität der Trennfuge oder Trennnut, insbesondere vorhandene Ausreißer und/oder Wellenschnitte auswertet. Damit wird die erfindungsgemäß vorgesehene Erfassungseinrichtung auf zuverlässige und einfache Art und Weise auch für die Qualitätskontrolle des Trennschnitts verwendet, was ohne großen Zusatzaufwand eine nochmalige Verbesserung der Arbeitsqualität der Sägevorrichtung gestattet.

Nachfolgend wird ein Ausführungsbeispiel der vorliegenden Erfindung unter Bezugnahme auf die beiliegende Zeichnung näher erläutert. In der Zeichnung zeigen.
- Figur 1: eine Seitenansicht auf eine Sägevorrichtung mit einer Trennsäge, einem Vorritzer und einer Erfassungseinrichtung zur Justierung eines Vorritzerblatts, sowie einen Schnitt durch ein gerade bearbeitetes Werkstück;
- Figur 2: eine Draufsicht auf eine Vorritzfüge und eine Trennfuge im Werkstück von Figur 1;
- Figur 3: einen Schnitt längs der Linie III-III von Figur 2;
- Figur 4: eine Darstellung ähnlich Figur 2 bei dejustiertem Vorritzerblatt;
- Figur 5: eine Darstellung ähnlich Figur 3 bei dejustiertem Vorritzerblatt;
- Figur 6: eine Darstellung ähnlich Figur 2 auf einen Grenzbereich zwischen Vorritzfuge und Trennfuge; und
- Figur 7: eine Darstellung ähnlich Figur 2 bei separater Vorritz- und Trennfuge.

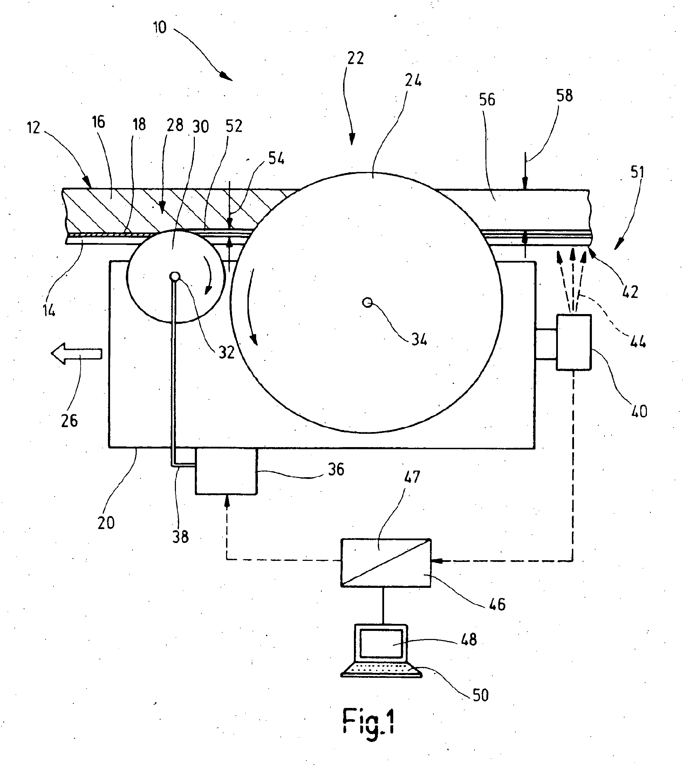

Eine Sägevorrichtung trägt in Figur 1 insgesamt das Bezugszeichen 10. Sie dient zum Sägen eines Werkstücks 12 und umfasst einen Werkstücktisch 14, auf dem das Werkstück 12 liegt. Das Werkstück umfasst im vorliegenden Fall eine Spanplatte 16 mit einer Oberflächenbeschichtung 18, mit der es auf dem Werkstücktisch 14 aufliegt.

Die Sägevorrichtung 10 umfasst ferner einen Vorschubwagen 20, an dem eine Trennsäge 22 mit einem Trennsägeblatt 24 befestigt ist. Während eines Sägevorgangs kann der Vorschubwagen 20 in Vorschubrichtung (Pfeil 26) bewegt werden. In Vorschubrichtung 26 gesehen vor der Trennsäge 22 ist ein Vorritzer 28 mit einem Vorritzerblatt 30 am Vorschubwagen 20 befestigt. Das Vorritzerblatt 30 wird im vorliegenden Ausführungsbeispiel um eine Achse 32 im Uhrzeigersinn angetrieben, wohingegen das Trennsägeblatt 24 vorliegend um eine Achse 34 entgegen dem Uhrzeigersinn angetrieben wird.

Am Vorschubwagen 20 befindet sich noch eine elektrische Verstelleinrichtung 36, mit der, wie durch eine Doppellinie 38 angedeutet ist, das Vorritzerblatt 30 senkrecht zur Blattebene von Figur 1 verstellt werden kann. Ferner ist am Vorschubwagen 20 noch eine Videokamera 40 angebracht, welche auf einen in Vorschubrichtung 26 gesehen unmittelbar hinter der Trennsäge 22 liegenden Schnittbereich 42 des Werkstücks 12 gerichtet ist, wie durch Visierpfeile 44 angedeutet ist. Alternativ zu einer Videokamera könnte auch eine Laser-Abtasteinrichtung oder eine Ultraschall-Abtasteinrichtung verwendet werden.

Die Videokamera 40 liefert entsprechende Signale an eine Auswerteeinrichtung 46 sowie eine Steuer- und Regeleinrichtung 47, die wiederum mit einem Monitor 48 und einer Eingabeeinrichtung 50 eines Computers verbunden ist. Die Videokamera 40, die Auswerteeinheit 46 mit der zugehörigen Steuer- und Regeleinrichtung 47, der Monitor 48 und die Eingabeeinheit 50 bilden insgesamt eine Erfassungseinrichtung 51, welche, wie weiter unten im Detail ausgeführt werden wird, an dem bearbeiteten Werkstück 12 die Relativlage einer Vorritzfuge des Vörritzblatts 30 gegenüber einer Trennfuge des Trennsägeblatts 24 erfasst. Die Steuer- und Regeleinrichtung 47 steuert wiederum die Verstelleinrichtung 36 an.

Im Betrieb wird durch den Vorritzer 28 mit dem Vorritzerblatt 30 zunächst eine Vorritzfuge 52 in das Werkstück 12 eingebracht, deren Tiefe 54 etwas größer ist als die Dicke der Oberflächenbeschichtung 18 des Werkstücks 12. Anschließend wird vom Trennsägeblatt 24 der Trennsäge 22 der eigentliche Trennschnitt durchgeführt, bei dem eine von der Vorritzfuge 52 ausgehende zusätzliche Trennfuge 56 mit einer Tiefe 58 in das Werkstück 12 eingesägt wird.

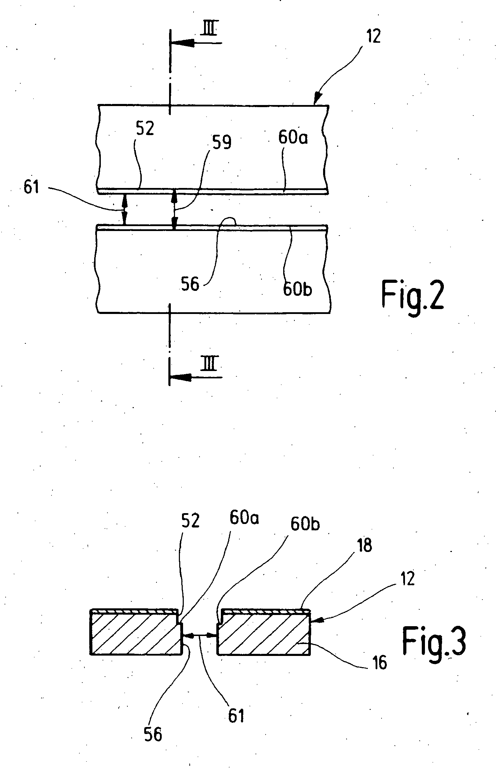

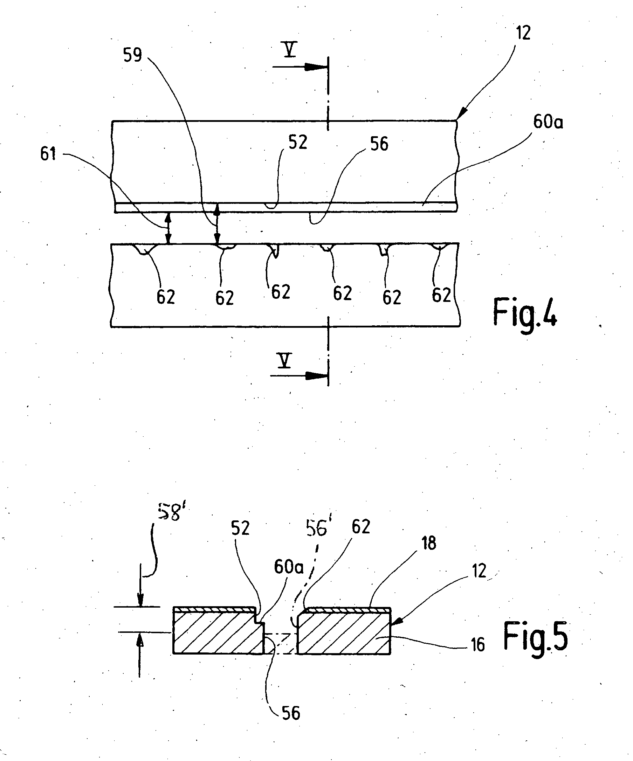

Wie aus Figur 2 hervorgeht, ist die Vorritzfuge 52 üblicherweise etwas breiter (Pfeil 59) als die Trennfuge 56 (Breite 61) mit einem zu beiden Seiten gleich großen Überstand 60a beziehungsweise 60b. Ein Schnitt durch das bearbeitete Werkstück 12 in einer zur Säge- beziehungsweise Vorschubrichtung 26 orthogonalen Ebene zeigt Figur 3. Ist das Vorritzerblatt 30 des Vorritzers 28 gegenüber dem Trennsägeblatt 24 der Trennsäge 22 dejustiert, kann sich das in den Figuren 4 und 5 gezeigte Schnittbild ergeben: Bei diesem fluchtet die Vorritzfuge 52 nicht mit der Trennfuge 56, sondern es ist auf der einen Seite ein großer Überstand 60a, auf der anderen Seite jedoch überhaupt kein Überstand vorhanden. Dies führt beim Einbringen der Trennfuge 56 zu Ausreißern 62 vor allem im Bereich der Oberflächenbeschichtung 18 am Werkstück 12.

Um solche Ausreißer 62 zu verhindern, ist es wichtig, das die Vorritzfuge 52 mit der Trennfuge 56 fluchtet und zu beiden Seiten der Vorritzfuge 52 gegenüber der Trennfuge 56 ein gewisser Überstand 60a und 60b vorhanden ist, entsprechend den Figuren 2 und 3. Da jedoch Vorritzerblätter mit Toleranzen behaftet sind, muss beispielsweise nach einem Werkzeugwechsel das Vorritzerblatt 30 gegenüber dem Trennsägeblatt 24 in einer Richtung senkrecht zur Blattebene von Figur 1 neu justiert werden, damit die Vorritzfuge 52 mit der Trennfuge 56 fluchtet. Daher wird von der Videokamera 40 der Schnittbereich 42 unmittelbar hinter der Trennsäge 22 anvisiert. Die Blickachse der Videokamera 40 liegt dabei ungefähr in einer Mittelebene des Trennsägeblatts 24.

Ist das Vorritzerblatt 30 gegenüber dem Trennsägeblatt 24 so justiert, dass die entsprechende Vorritzfüge 52 mit der Trennfuge 56 fluchtet, ergibt sich für die Videokamera 40 beispielsweise das in Figur 2 dargestellte Bild, welches auch auf dem Monitor 48 dargestellt wird. Ist das Vorritzerblatt 30 jedoch dejustiert, ergibt sich für die Videokamera 40 beispielsweise das in Figur 4 dargestellte Bild. Durch die Auswerteeinrichtung 46 wird in diesem Falle erkannt, dass der Überstand 60a deutlich größer ist als der Überstand 60b, der im vorliegenden Ausführungsbeispiel nahe Null ist. Die Videokamera 40 und die Auswerteeinheit 46 bilden also eine Bilderkennungseinrichtung, welche eine Ist-Relativlage der Vorritzfuge 52 gegenüber der Trennfuge 56 erfasst bzw. erkennt.

Ausgehend von der erfassten Ist-Relativlage der Vorritzfuge 52 gegenüber der Trennfuge 56 wird die Verstelleinrichtung 36 über die Steuer- und Regeleinrichtung 46 so angesteuert, dass die Vorritzfuge 52 wieder mit der Trennfuge 56 fluchtet, entsprechend der Darstellung von Figur 2. Von der Bilderkennungseinrichtung, die durch die Videokamera 40 und die Auswerteeinheit 46 gebildet wird, wird jedoch nicht nur erkannt, ob die Vorritzfuge 52 relativ zur Trennfuge 56 fluchtet, sondern es werden auch die Ausreißer 62 (oder in de Figur nicht gezeigte Wellenschnitte) festgestellt und während des Einbringens von Vorritzfuge 52 und Trennfuge 56 wird deren Auftreten überwacht. Beispielsweise werden Größe und Anzahl der Ausreißer 62 pro Längeneinheit erfasst, was eine quantifizierbare Qualitätsbewertung des Arbeitsergebnisses am Werkstück 12 ermöglicht. Auch ist möglich, dass die Steuer-und Regeleinrichtung 46 die Ist-Relativlage so einstellt, dass Größe und Anzahl der Ausreißer 62 minimal sind.

In einem nicht dargestellten Ausführungsbeispiel wird an Stelle einer Videokamera eine Laser-Abtasteinrichtung oder eine Ultraschall-Abtasteinrichtung verwendet. Mit diesen beiden Abtasteinrichtungen ist die Erfassung eines Schnittbildes in einer zur Schnittrichtung 26 orthogonalen Ebene beziehungsweise die Erfassung der Vorritzfuge 52 und der Trennfuge 56 im Profil möglich, entsprechend den Darstellungen in den Figuren 3 und 5.

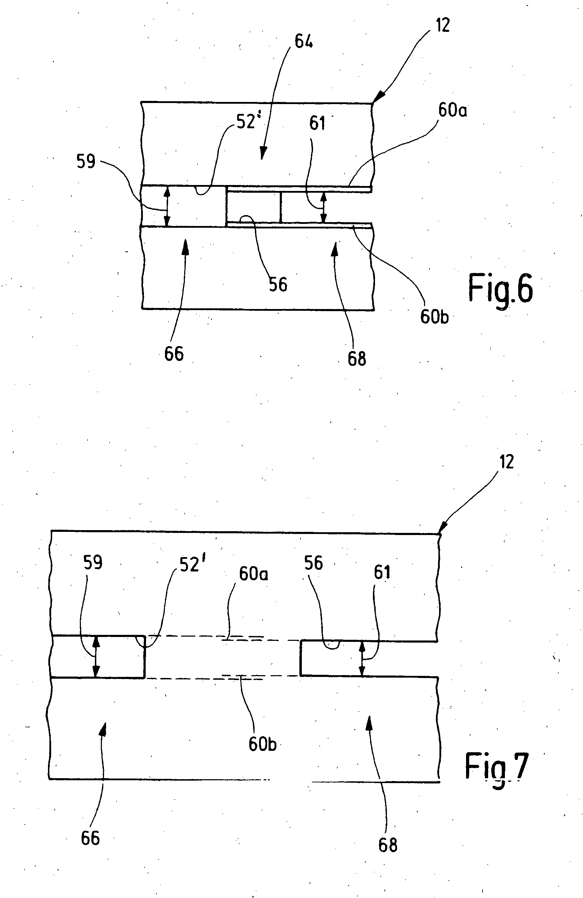

Wird eine Videokamera oder eine Laser-Abtastvorrichtung verwendet, wie in Figur 1 entsprechend Bezugszeichen 40, kann gemäß Figur 6 die Erfassung der Relativlage der Vorritzfuge 52' gegenüber der Trennfuge 56 auch in einem "nicht-kontinuierlichen" Verfahren erfolgen. Bei diesem werden das Trennsägeblatt 24 und das Vorritzerblatt 30 in der Blattebene von Figur 1 aus dem Werkstück 12 herausgezogen, noch bevor das Werkstück 12 vollständig getrennt ist. Dann wird der Vorschubwagen 20 so bewegt, dass die Videokamera 40 genau auf einen Grenzbereich 64 gerichtet ist, der zwischen einem Bereich 66 liegt, in dem nur die Vorritzfuge 52' vorhanden ist, und einem Bereich 68, in dem die Trennfuge 56 vollständig in das Werkstück 12 eingebracht ist (vergleiche Figur 6). Bei der Vorritzfuge handelt es sich also streng genommen nicht um eine Fuge, sondern lediglich um eine Vorritznut 52'.

Eine weitere Vorgehensweise ergibt sich aus Figur 7: Bei dieser Vorgehensweise werden Vorritzfuge 52 und Trennfuge 56 separat voneinander an unterschiedlichen Stellen, also nicht überlappend, in das Werkstück 12 eingebracht. Bei der Vorritzfuge handelt es sich also auch hier streng genommen nicht um eine Fuge, sondern lediglich um eine Vorritznut 52'. Vorritznut 52' und Trennfuge 56 werden dann von der Videokamera 40 mittels Bildverarbeitung vermessen und ihre Ist-Relativlage ermittelt. Zur automatischem Justierung des Vorritzerblatts 30 gegenüber dem Trennsägeblatt 24 werden von der Bilderkennungseinrichtung 40, 46 die Abweichungen 60a und 60b der Vorritznut 52' von der Trennfuge 56 an die Steuer- und Regeleinrichtung 47 übermittelt. Diese positioniert dann das Vorritzerblatt 30 mittels der Verstelleinrichtung 36 so, dass dieses mit dem Trennsägeblatt 24 fluchtet.

Es versteht sich, dass in allen Ausführungsbeispielen anhand der Bilderkennungseinrichtung 40, 46 darüber hinaus auch die Breite der Vorritzfuge 52 bzw. 52' eingestellt und optimiert werden kann, wenn das Vorritzerblatt 30 beispielsweise konisch ist und senkrecht zur Ebene des Werkstücks 12 verstellt werden kann.

In den oben beschriebenen Ausführungsbeispielen wird jeweils eine Trennfuge 56 erzeugt, deren Tiefe 58 der Dicke des Werkstücks 12 entspricht. Möglich ist aber auch, dass der Schnitt der Trennsäge 24 nur eine Tiefe 58' aufweist, die geringer ist als die Dicke des Werkstücks 12. Der Schnitt führt also nicht zu einer Trennfuge, sondern lediglich zu einer Trennnut 56'. Dies ist beispielhaft in Figur 5 strichpunktiert gezeigt, kann jedoch ohne weiteres auch auf alle anderen Ausführungsbeispiele angewendet werden.

## Patentansprüche

1. Sägevorrichtung (10) zum Aufteilen eines plattenförmigen Werkstücks (12) mit einer Trennsäge (22), einem in einer Sägerichtung (26) gesehen vor der Trennsäge (22) angeordneten Vorritzer (28) und einer Verstelleinrichtung (36) zum Verstellen der Position des Vorritzers (28) quer zur Sägerichtung (26) und relativ zur Trennsäge (22), **dadurch gekennzeichnet, dass** sie eine Erfassungseinrichtung (51) umfasst, welche an dem bearbeiteten werkstück (12) eine Ist-Relativlage einer vom Vorritzer (28) erzeugten vorritzfuge (52) oder Vorritznut (52') gegenüber einer von der Trennsäge (22) erzeugten Trennfuge (56) oder Trennnut (56') und/oder die Qualität der Trennfuge (56) bzw. Trennnut (56') erfassen kann.

2. Sägevorrichtung (10) nach Anspruch 1, **dadurch gekennzeichnet, dass** die Erfassungseinrichtung (51) eine Bilderkennung (40, 46) umfasst.

3. Sägevorrichtung nach Anspruch 1, **dadurch gekennzeichnet, dass** die Erfassungseinrichtung eine Laser-Abtasteinrichtung umfasst.

4. Sägevorrichtung nach Anspruch 1, **dadurch gekennzeichnet, dass** die Erfassungseinrichtung eine Ultraschall-Abtasteinrichtung umfasst.

5. Sägevorrichtung (10) nach einem der vorhergehenden Ansprüche, **dadurch gekennzeichnet, dass** die Erfassungseinrichtung (51) einen Monitor (48) umfasst, auf dem die Relativlage der Vorritzfuge (52) oder Vorritznut (52') gegenüber der Trennfuge (56) oder Trennnut (56') visualisierbar ist.

6. Sägevorrichtung (10) nach einem der vorhergehenden Ansprüche, **dadurch gekennzeichnet, dass** die Verstelleinrichtung (36) fernbedienbar ist.

7. Sägevorrichtung (10) nach Anspruch 6, **dadurch gekennzeichnet, dass** sie eine Steuer- und Regeleinrichtung (47) aufweist, welche die Verstelleinrichtung (36) ansteuert und so die erfasste Ist-Relativlage automatisch auf eine Soll-Relativlage einstellt.

8. Sägevorrichtung (10) nach Anspruch 6, **dadurch gekennzeichnet, dass** sie eine Steuer- und Regeleinrichtung (47) aufweist, welche die Verstelleinrichtung (36) ansteuert und die erfasste Ist-Relativlage automatisch so einstellt, dass die Qualität der Trennfuge (56) oder Trennnut (56') optimal ist.

9. Sägevorrichtung (10) nach einem der vorhergehenden Ansprüche, **dadurch gekennzeichnet, dass** die Trennsäge (22) und/oder der Vorritzer (28) und mindestens ein Teil der Erfassungseinrichtung (51) an einem gemeinsamen Vorschubwagen (20) angeordnet sind.

10. Sägevorrichtung nach einem der Ansprüche 1 bis 8, **dadurch gekennzeichnet, dass** mindestens ein Teil der Erfassungseinrichtung an einem eigenen verfahrbaren Wagen angeordnet ist.

11. Sägevorrichtung (10) nach einem der vorhergehenden Ansprüche, **dadurch gekennzeichnet, dass** die Erfassungseinrichtung. (51) die Vorritzfuge (52) und die Trennfuge (56) oder Trennnut (56') in einer zur Sägerichtung (26) orthogonalen Ebene erfasst.

12. Sägevorrichtung (10) nach einem der Ansprüche 1 bis 10, **dadurch gekennzeichnet, dass** die Erfassungseinrichtung (51) eine Draufsicht auf den Bereich (42) einer Vorritzfuge (52) oder Vorritznut (52') und einer Trennfuge (56) oder Trennnut (56') am bearbeiteten Werkstück (12) erfasst.

13. Sägevorrichtung (10) nach einem der vorhergehenden Ansprüche, **dadurch gekennzeichnet, dass** die Erfassungseinrichtung (51) eine Auswerteeinrichtung (46) umfasst, welche die Qualität der Trennfuge (56) oder Trennnut (56'), insbesondere vorhandene Ausreißer (62) und/oder Wellenschnitte auswertet.

## Claims

1. A sawing device (10) for dividing a platelike workpiece (12), having a cutoff saw (22), a scorer (28) disposed upstream in a sawing direction (26) from the cutoff saw (22), and an adjusting device (36) for adjusting the position of the scorer (28) transversely to the sawing direction (26) and relative to the cutoff saw (22), **characterized in that** it includes an acquisition device (51), which can acquire an actual relative position on the machined workpiece (12) of a scoring groove (52) or scoring channel (52') made by the scorer (28) relative to a separating groove (56) or separating channel (56') made by the cutoff saw (22) and/or the quality of the separating groove (56) or separating channel (56').

2. The sawing device (10) of claim 1, **characterized in that** the acquisition device (51) includes an image identifier (40, 46).

3. The sawing device of claim 1, **characterized in that** the acquisition device includes a laser scanning device.

4. The sawing device of claim 1, **characterized in that** the acquisition device includes an ultrasound scanning device.

5. The sawing device (10) of one of the foregoing claims, **characterized in that** the acquisition device (51) includes a monitor (48), on which the relative location of the scoring groove (52) or scoring channel (52') relative to the separating groove (56) or separating channel (56') can be displayed.

6. The sawing device (10) of one of the foregoing claims, **characterized in that** the adjusting device (36) is remote-controllable.

7. The sawing device (10) of claim 6, **characterized in that** it has a control and regulating device (47), which triggers the adjusting device (36) and thus automatically sets the acquired actual relative position to a desired relative position.

8. The sawing device (10) of claim 6, **characterized in that** it has a control and regulating device (47) that triggers the adjusting device (36) and automatically sets the acquired actual relative position such that the quality of the separating groove (56) or separating channel (56') is optimal.

9. The sawing device (10) of one of the foregoing claims, **characterized in that** the cutoff saw (22) and/or the scorer (28) and at least a portion of the acquisition device (51) are all disposed on a common traveler (20).

10. The sawing device of one of claims 1-8, **characterized in that** at least a portion of the acquisition device is disposed on its own movable traveler.

11. The sawing device (10) of one of the foregoing claims, **characterized in that** the acquisition device (51) acquires the scorer (28) and the separating groove (56) or separating channel (56') in a plane orthogonal to the sawing direction (26).

12. The sawing device (10) of one of claims 1-10, **characterized in that** the acquisition device (51) acquires a top view onto the vicinity (42) of a scoring groove (52) or scoring channel (52') and of a separating groove (56) or separating channel (56') on the machined workpiece (12).

13. The sawing device (10) of one of the foregoing claims, **characterized in that** the acquisition device (51) includes an evaluation device (46), which evaluates the quality of the separating groove (56) or separating channel (56'), and in particular stripping (62) and/or wavy cuts.

## Revendications

1. Dispositif de sciage (10) permettant de diviser une pièce (12) en forme de plaque, pourvu d'une scie à débiter (22), d'un inciseur (28) disposé devant la scie à débiter (22), vu dans une direction de sciage (26), et d'un dispositif de réglage (36) destiné à régler la position de l'inciseur (28) transversalement à la direction de sciage (26) et par rapport à la scie à débiter (22), **caractérisé en ce que** ledit dispositif de sciage comprend un dispositif d'acquisition (51), lequel peut acquérir sur la pièce (12) usinée une position relative réelle d'une fente d'incision (52) ou d'une rainure d'incision (52') produite par l'inciseur (28) par rapport à une fente de séparation (56) ou à une rainure de séparation (56') produite par la scie à débiter (22) et/ou la qualité de la fente de séparation (56) ou de la rainure de séparation (56').

2. Dispositif de sciage (10) selon la revendication 1, **caractérisé en ce que** le dispositif d'acquisition (51) comprend une reconnaissance d'image (40, 46).

3. Dispositif de sciage selon la revendication 1, **caractérisé en ce que** le dispositif d'acquisition comprend un dispositif de balayage par faisceau laser.

4. Dispositif d sciage selon la revendication 1, **caractérisé en ce que** le dispositif d'acquisition comprend un dispositif de balayage par ultrasons.

5. Dispositif de sciage (10) selon l'une quelconque des revendications précédentes, **caractérisé en ce que** le dispositif d'acquisition (51) comprend un écran de contrôle (48) sur lequel peut être visualisée la position relative de la fente d'incision (52) ou de la rainure d'incision (52') par rapport à la fente de séparation (56) ou la rainure de séparation (56').

6. Dispositif de sciage (10) selon l'une quelconque des revendications précédentes, **caractérisé en ce que** le dispositif de réglage (36) peut être commandé à distance.

7. Dispositif de sciage (10) selon la revendication 6, **caractérisé en ce qu'**il comprend un dispositif de commande et de régulation (47) commandant le dispositif de réglage (36) et adaptant ainsi automatiquement la position relative réelle acquise à une position relative théorique.

8. Dispositif de sciage (10) selon la revendication 6, **caractérisé en ce qu'**il comprend 'un dispositif de commande et de régulation (47), lequel commande le dispositif de réglage (36) et acquiert automatiquement la position relative réelle acquise de sorte que la qualité de la fente de séparation (56) ou de la rainure de séparation (56') soit optimale.

9. Dispositif de sciage (10) selon l'une quelconque des revendications précédentes, **caractérisé en ce que** la scie à débiter (22) et/ou l'inciseur (28) et au moins une partie du dispositif d'acquisition (51) sont disposés sur un chariot d'avance (20) commun.

10. Dispositif de sciage selon l'une quelconque des revendications 1 à 8, **caractérisé en ce qu'**au moins une partie du dispositif d'acquisition est disposée sur un chariot mobile séparé.

11. Dispositif de sciage (10) selon l'une quelconque des revendications précédentes, **caractérisé en ce que** le dispositif d'acquisition (51) acquiert la fente d'incision (52) et la fente de séparation (56) ou la rainure de séparation (56') dans un plan perpendiculaire à la direction de sciage (26).

12. Dispositif de sciage (10) selon l'une quelconque des revendications 1 à 10, **caractérisé en ce que** le dispositif d'acquisition (51) acquiert une vue en élévation de la zone (42) d'une fente d'incision (52) ou d'une rainure d'incision (52') et d'une fente de séparation (56) ou d'une rainure de séparation (56') sur la pièce (12) usinée.

13. Dispositif de sciage (10) selon l'une quelconque des revendications précédentes, **caractérisé en ce que** le dispositif d'acquisition (51) comprend un dispositif d'évaluation (46), lequel évalue la qualité de la fente de séparation (56) ou de la rainure de séparation (56'), en particulier la présence d'un point aberrant (62) et/ou de coupes ondulées.
